# EUROPEAN PATENT APPLICATION

(11) **EP 4 461 406 A1**
(43) Date of publication of application: **13.11.2024**
(21) Application number: 24170749.6
(22) Date of filing: 17.04.2024
(51) Int. Cl.: B01L 3/02

(54) **DROPLET DISPENSING DEVICE AND CONTROL METHOD**

(30) Priority: 01.05.2023 JP 2023075561
(71) Applicant: Funai Electric Co., Ltd., Daito, Osaka, 574-0013 (JP)
(72) Inventor: FUKUI, Satoshi, Daito, Osaka, 574-0013 (JP); SAKAI, Hiroki, Daito, Osaka, 574-0013 (JP); KAJIHARA, Kentaro, Daito, Osaka, 574-0013 (JP); NODA, Yutaka, Daito, Osaka, 574-0013 (JP)
(74) Representative: Kurig, Thomas

(57) **Abstract**

A droplet dispensing device includes an adjustment plate; a first sensor, provided on an upper surface of the adjustment plate and detecting a position of the transparent droplet; a tray, on which one of the well plate and the adjustment plate is detachably mounted; a head part, discharging the transparent droplet; and a CPU, switching an operation mode from one of a first mode and a second mode to the other. In the first mode, the transparent droplet is discharged from the head part toward the well plate, and in the second mode, the transparent droplet is discharged from the head part toward the first sensor. The CPU adjusts the position on the well plate in which the transparent droplet is discharged from the head part in the first mode based on a position of the transparent droplet detected by the first sensor in the second mode.

## Description

### BACKGROUND

### Technical Field

The disclosure relates to a droplet dispensing device and a control method for dispensing a transparent droplet into a well plate.

### Related Art

A droplet dispensing device is known to dispense a colorless and transparent droplet of a sample, specimen, etc. into a well plate. In this droplet dispensing device, a predetermined amount of the transparent droplet is discharged from an inkjet head toward each of the plurality of wells formed on the upper surface of the well plate.

Furthermore, an inkjet printer is known to print on an object using colored opaque ink discharged from a nozzle head. This inkjet printer prints an alignment mark on the object using colored ink discharged from the nozzle head, calculates the relative position between the nozzle head and the camera by capturing this alignment mark with a camera, and uses a technology for adjusting (calibrating) the ink discharge position from the nozzle head (see, for example, Patent Document 1 (Japanese Patent Application Laid-Open (JP-A) No. 2018-122304)).

When applying the technology disclosed in Patent Document 1 to the conventional droplet dispensing device described above, since it is difficult for cameras to recognize the alignment mark printed using the transparent droplet, a problem arises in that the discharge position of the transparent droplet is unable to be adjusted with high precision.

The disclosure provides a droplet dispensing device and a control method that is capable of precisely adjusting the discharge position of a transparent droplet.

### SUMMARY

The droplet dispensing device in the first aspect of the disclosure is a droplet dispensing device for dispensing a transparent droplet into a well plate with a well formed on an upper surface, including: an adjustment plate; a sensor, provided on an upper surface of the adjustment plate and detecting a position of the transparent droplet attached to a front surface; a mount part, on which one of the well plate and the adjustment plate is detachably mounted; a discharge part, discharging the transparent droplet; a driving part, moving the mount part and the discharge part relative to each other; and a controller, controlling the discharge part and the driving part, the controller switching an operation mode of the discharge part and the driving part from one of a first mode and a second mode to the other. In the first mode, the transparent droplet is discharged from the discharge part toward the well of the well plate with the well plate mounted on the mount part, and in the second mode, the transparent droplet is discharged from the discharge part toward the sensor with the adjustment plate mounted on the mount part. The controller adjusts a position on the well plate in which the transparent droplet is discharged from the discharge part in the first mode based on a position of the transparent droplet detected by the sensor in the second mode.

According to this aspect, the controller adjusts a position on the well plate in which the transparent droplet is discharged from the discharge part in the first mode based on a position of the transparent droplet detected by the sensor in the second mode. Thereby, even when the transparent droplet is colorless and transparent, the discharge position of the transparent droplet in the first mode may be adjusted with high precision.

Further, in the control method according to the ninth aspect of the disclosure, the control method is for a droplet dispensing device for dispensing a transparent droplet into a well plate with a well formed on an upper surface, the droplet dispensing device includes: an adjustment plate; a sensor, provided on an upper surface of the adjustment plate and detecting a position of the transparent droplet attached to a front surface; a mount part, on which one of the well plate and the adjustment plate is detachably mounted; a discharge part, discharging the transparent droplet; and a driving part, moving the mount part and the discharge part relative to each other, and the control method includes: a step of causing the transparent droplet to be discharged from the discharge part toward the well of the well plate, with the well plate mounted on the mount part, when an operation mode of the discharge part and the driving part is switched to a first mode; a step of causing the transparent droplet to be discharged from the discharge part toward the sensor, with the adjustment plate mounted on the mount part, when the operation mode of the discharge part and the driving part is switched to a second mode; and a step of adjusting a position on the well plate in which the transparent droplet is discharged from the discharge part in the first mode based on a position of the transparent droplet detected by the sensor in the second mode.

According to this aspect, a position on the well plate in which the transparent droplet is discharged from the discharge part in the first mode is adjusted based on a position of the transparent droplet detected by the sensor in the second mode. Thereby, even when the transparent droplet is colorless and transparent, the discharge position of the transparent droplet in the first mode may be adjusted with high precision.

### BRIEF DESCRIPTION OF THE DRAWINGS

FIG. 1 is a perspective view showing the appearance of the droplet dispensing device according to the embodiment.
FIG. 2 is a perspective view showing the structure inside the droplet dispensing device according to the embodiment.
FIG. 3 is a perspective view showing the adjustment plate of the droplet dispensing device according to the embodiment.
FIG. 4 is a cross-sectional view of the main part of the adjustment plate according to the embodiment taken along line IV-IV in FIG. 3.
FIG. 5 is a block diagram showing the functional configuration of the droplet dispensing device according to the embodiment.
FIG. 6 is a flow chart showing the overall operation flow in the second mode in the droplet dispensing device according to the embodiment.
FIG. 7 is a flow chart specifically showing the contents of step S101 of the flow chart in FIG. 6. (a) and (b) of FIG. 8 are diagrams illustrating the contents of step S101 of the flow chart in FIG. 6.
FIG. 9 is a flow chart specifically showing the contents of step S102 of the flow chart in FIG. 6.
FIG. 10 is a diagram illustrating the contents of step S102 of the flow chart in FIG. 6.
FIG. 11 is a flow chart specifically showing the contents of step S 103 of the flow chart in FIG. 6.
FIG. 12 is a diagram illustrating the contents of step S103 of the flow chart in FIG. 6.
FIG. 13 is a flow chart showing the flow of the clogging determination operation for the nozzle in the droplet dispensing device according to the embodiment.
FIG. 14 is a diagram illustrating the clogging determination operation for the nozzle in the droplet dispensing device according to the embodiment.

### DESCRIPTION OF THE EMBODIMENTS

Hereinafter, the embodiments of the disclosure will be described in detail with reference to the drawings. It is noted that the embodiments described below are all inclusive or specific examples. The numerical values, shapes, materials, constituent elements, arrangement of constituent elements, connection forms, etc. shown in the following embodiments are merely examples, and do not limit the disclosure. Further, among the constituent elements in the following embodiments, constituent elements that are not described in the independent claims will be described as arbitrary constituent elements.

For example, in the droplet dispensing device according to the second aspect of the disclosure, in the first aspect, the adjustment plate has a first terminal electrically connected to the sensor, the mount part has a second terminal electrically connected to the controller, and in the second mode, with the adjustment plate mounted on the mount part, a detection signal from the sensor may be output to the controller via the first terminal and the second terminal by electrically connecting the first terminal and the second terminal.

According to this aspect, an electrical connection between the sensor and the controller may be easily established.

For example, in the droplet dispensing device according to the third aspect of the disclosure, in the second aspect, the droplet dispensing device further includes a storage part provided on the adjustment plate and electrically connected to the first terminal, and the storage part stores sensor information regarding the sensor, and in the second mode, the controller may read the sensor information from the storage part via the first terminal and the second terminal and adjust a position on the well plate in which the transparent droplet is discharged from the discharge part in the first mode based on a position of the transparent droplet detected by the sensor and the sensor information.

According to this aspect, the controller may easily acquire sensor information from the storage part located on the adjustment plate.

For example, in the droplet dispensing device according to the fourth aspect of the disclosure, in any one of the first to the third aspects, in the second mode, with the adjustment plate mounted on the mount part, the controller controls the discharge part and the driving part so that a reference position in the sensor is set as a target position and the transparent droplet is discharged, and the controller may adjust a position on the well plate in which the transparent droplet is discharged from the discharge part in the first mode based on a shift amount between the reference position of the sensor and a position of the transparent droplet detected by the sensor.

According to this aspect, the shift amount of the discharge position of the transparent droplet from the discharge part in the first mode may be easily corrected.

For example, in the droplet dispensing device according to the fifth aspect of the disclosure, in any one of the first to the fourth aspects, the discharge part includes a plurality of nozzles arranged at intervals along a first direction, and the plurality of nozzles have a first nozzle and a second nozzle. In the second mode, with the adjustment plate mounted on the mount part, the controller may control the discharge part and the driving part so that the transparent droplet is discharged from each of the first nozzle and the second nozzle toward the sensor, and the controller may adjust a position on the well plate in which the transparent droplet is discharged from the discharge part in the first mode based on a shift amount in a second direction intersecting the first direction between a first reference position in the sensor and a position of the transparent droplet from the first nozzle detected by the sensor and a shift amount in the second direction between a second reference position in the sensor and a position of the transparent droplet from the second nozzle detected by the sensor.

According to this aspect, the shift amount of the discharge position of the transparent droplet from the discharge part in the first mode due to the error in the mounting position of the discharge part may be easily corrected.

For example, in the droplet dispensing device according to the sixth aspect of the disclosure, in any one of the first to the fifth aspects, the driving part moves the mount part in a first direction with respect to the discharge part, the sensor has a first sensor and a second sensor arranged at intervals along the first direction on the upper surface of the adjustment plate, and in the second mode, with the adjustment plate mounted on the mount part, the controller controls the discharge part and the driving part so that the transparent droplet is discharged from the discharge part toward each of the first sensor and the second sensor while moving the mount part in the first direction with respect to the discharge part, and the controller may adjust a position on the well plate in which the transparent droplet is discharged from the discharge part in the first mode based on a shift amount in a second direction intersecting the first direction between a first reference position in the first sensor and a position of the transparent droplet detected by the first sensor and a shift amount in the second direction between a second reference position in the second sensor and a position of the transparent droplet detected by the second sensor.

According to this aspect, the shift amount of the discharge position of the transparent droplet from the discharge part in the first mode due to the distortion of the moving direction of the mount part may be easily corrected.

For example, in the droplet dispensing device according to the seventh aspect of the disclosure, in any one of the first to the sixth aspects, the discharge part has a plurality of nozzles, and in the second mode, with the adjustment plate mounted on the mount part, the controller may control the discharge part and the driving part so that the transparent droplet is discharged from each of the plurality of nozzles, one nozzle each, toward a plurality of different positions in the sensor, and the controller may determine, when a position of the transparent droplet from a specific nozzle among the plurality of nozzles is not detected by the sensor, that the specific nozzle is clogged.

According to this aspect, whether a specific nozzle is clogged may be easily determined.

For example, in the droplet dispensing device according to the eighth aspect of the disclosure, in the seventh aspect, the controller, when a position of the transparent droplet from the specific nozzle is not detected by the sensor, may control the discharge part so that the transparent droplet is discharged again from the specific nozzle, and, when a position of the transparent droplet from the specific nozzle is not detected again by the sensor as a result, may determine that the specific nozzle is clogged.

According to this aspect, whether a specific nozzle is clogged may be easily determined with high precision.

According to the droplet dispensing device in one aspect of the disclosure, the discharge position of the transparent droplet may be adjusted with high precision.

### (Embodiment)

### [1. Overall configuration of droplet dispensing device]

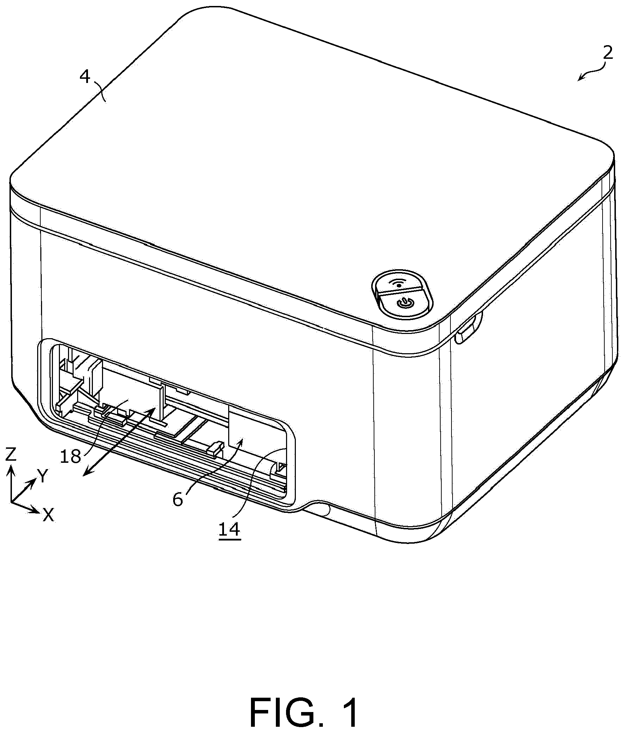

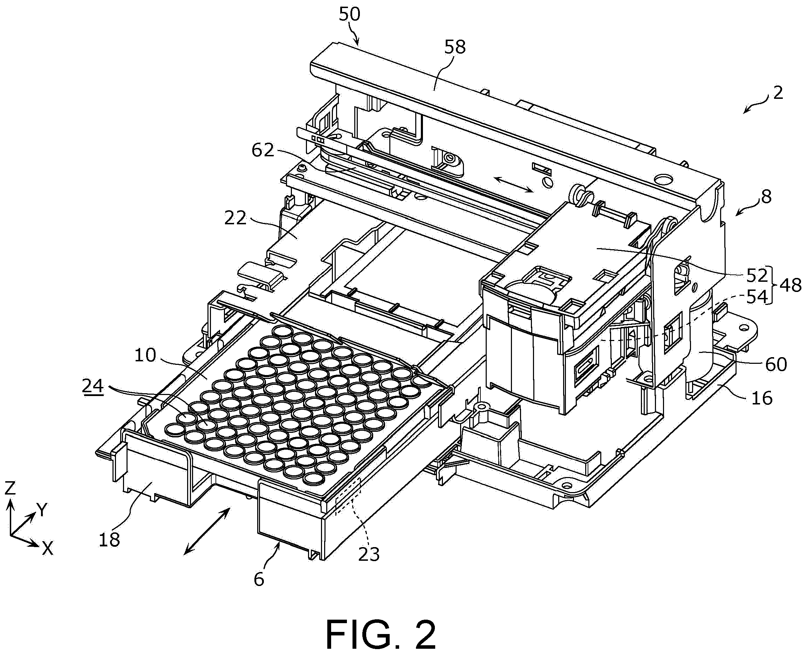

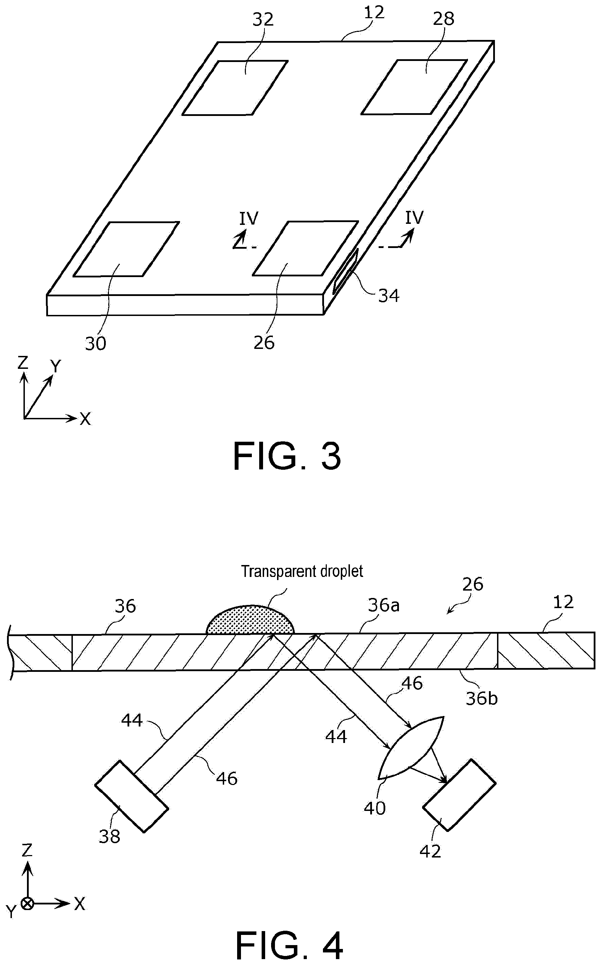

First, the overall configuration of the droplet dispensing device 2 according to the embodiment will be described with reference to FIG. 1 to FIG. 4. FIG. 1 is a perspective view showing the appearance of the droplet dispensing device 2 according to the embodiment. FIG. 2 is a perspective view showing the structure inside the droplet dispensing device 2 according to the embodiment. FIG. 3 is a perspective view showing the adjustment plate 12 of the droplet dispensing device 2 according to the embodiment. FIG. 4 is a cross-sectional view of the main part of the adjustment plate 12 according to the embodiment taken along line IV-IV in FIG. 3.

In FIG. 1 to FIG. 4, the left and right direction of the droplet dispensing device 2 is referred to as the X-axis direction, the front and back direction of the droplet dispensing device 2 is referred to as Y-axis direction, and the up and down direction of the droplet dispensing device 2 is referred to as the Z-axis direction. Further, the plus side in the X-axis direction is described as "right," the minus side in the X-axis direction is described as "left," the plus side in the Y-axis direction is described as "back," the minus side in the Y-axis direction is described as "front," the plus side in the Z-axis direction is described as "upper," and the minus side in the Z-axis direction is described as "lower."

As shown in FIG. 1 and FIG. 2, the droplet dispensing device 2 includes a housing 4, a tray unit 6, a discharge unit 8, a well plate 10, and an adjustment plate 12. In this embodiment, the droplet dispensing device 2 is a device for dispensing a transparent droplet into the well plate 10. The transparent droplet is a colorless and transparent liquid reagent or liquid sample used, for example, in tests in the medical field or the physical and chemical fields. It is noted that in this specification, "transparent" is a concept that includes transparency exhibiting a transmittance of less than 100% and a relatively high transmittance (e.g., about 80 to 90% transmittance).

As shown in FIG. 1, the housing 4 is formed into a hollow box shape. An opening part 14 is formed on the front of the housing 4 to take the well plate 10 and adjustment plate 12 in and out. Further, as shown in FIG. 2, a base plate 16 for supporting each component of the droplet dispensing device 2 is provided inside the housing 4.

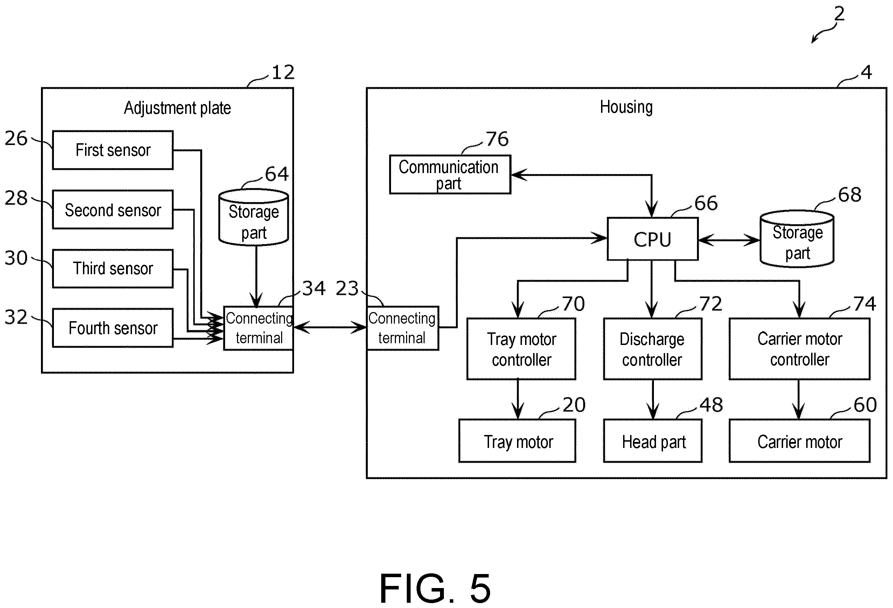

The tray unit 6 includes a tray 18 (an example of a mount part) and a tray motor 20 (see FIG. 5 described later) (an example of a driving part). It is noted that for convenience of description, the tray motor 20 is omitted in FIG. 2.

The tray 18 is for detachably mounting one of the well plate 10 and the adjustment plate 12. That is, either the well plate 10 or the adjustment plate 12 is selectively and detachably mounted on the upper surface of the tray 18. The tray 18 is supported by a guide plate 22 provided inside the housing 4 so as to be movable in the front and back direction (Y-axis direction). Thereby, the tray 18 is movable in the front and back direction (an example of a first direction) along the guide plate 22 between a storage position (the position of the tray 18 shown in FIG. 1), which is stored inside the housing 4, and a pull-out position (the position of the tray 18 shown in FIG. 2), in which at least a part is pulled out toward the front side (minus side in the Y-axis direction) through the opening part 14 of the housing 4. Further, a connecting terminal 23 (an example of a second terminal) is provided on the inner surface of the tray 18.

The tray motor 20 includes, for example, a servo motor, and is supported by the base plate 16 inside the housing 4. The tray motor 20 moves the tray 18 in the front and back direction relative to the head part 48 (described later). Specifically, by transmitting the driving force of the tray motor 20 to the tray 18 via a rack and pinion mechanism (not shown), the tray 18 is moved between the storage position and the pull-out position. With the tray 18 in the pull-out position, one of the well plate 10 and the adjustment plate 12 may be attached to and detached from the tray 18.

The well plate 10 is formed, for example, in a substantially rectangular flat-plate shape when viewed from the XY plane, and is detachably mounted on the upper surface of the tray 18. As shown in FIG. 2, a plurality of wells 24 are arranged in a matrix on the upper surface of the well plate 10. Each of the plurality of wells 24 is a recess for storing the transparent droplet discharged from the head part 48. With the tray 18 in the storage position, the plurality of wells 24 of the well plate 10 are arranged below the head part 48.

The adjustment plate 12 is formed, for example, in a substantially rectangular flat-plate shape when viewed from the XY plane, and is detachably mounted on the upper surface of the tray 18. As shown in FIG. 3, a first sensor 26 (an example of a sensor), a second sensor 28 (an example of a sensor), a third sensor 30 (an example of a sensor), and a fourth sensor 32 (an example of a sensor) are arranged at the four corners of the upper surface of the adjustment plate 12, respectively. The first sensor 26 and the second sensor 28 are arranged at an interval in the front and back direction at the right side end part of the adjustment plate 12, while the third sensor 30 and the fourth sensor 32 are arranged at an interval in the front and back direction at the left side end part of the adjustment plate 12. The first sensor 26 and the third sensor 30 are arranged at an interval in the left and right direction (X-axis direction) at the front side end part of the adjustment plate 12, while the second sensor 28 and the fourth sensor 32 are arranged at an interval in the left and right direction at the back side end part of the adjustment plate 12.

Further, a connecting terminal 34 (an example of a first terminal) electrically connected to each of the first sensor 26, the second sensor 28, the third sensor 30, and the fourth sensor 32 is provided on the side surface of the adjustment plate 12. With the adjustment plate 12 mounted on the upper surface of the tray 18, the connecting terminal 23 of the tray 18 and the connecting terminal 34 of the adjustment plate 12 are electrically connected.

Each of the first sensor 26, the second sensor 28, the third sensor 30, and the fourth sensor 32 is an optical sensor for detecting the position of the transparent droplet attached to the front surface thereof (the front surface 36a of the translucent panel 36 described later), and outputs a detection signal indicating the position of the detected transparent droplet. Since each of the first sensor 26, the second sensor 28, the third sensor 30, and the fourth sensor 32 has the same configuration, hereinafter, only the configuration of the first sensor 26 will be described.

As shown in FIG. 4, the first sensor 26 includes a translucent panel 36, a light source 38, an objective lens 40, and a capturing element 42. The translucent panel 36 is a substantially rectangular translucent panel when viewed from the XY plane, and is exposed on the upper surface of the adjustment plate 12. The light source 38 includes, for example, an LED (light emitting diode), and is provided inside the adjustment plate 12. The light from the light source 38 enters the back surface 36b (the surface far from the head part 48) of the translucent panel 36, passes through the translucent panel 36, is reflected by the front surface 36a (the surface close to the head part 48) of the translucent panel 36, passes through the translucent panel 36 again, and emits from the back surface 36b of the translucent panel 36. The objective lens 40 is provided inside the adjustment plate 12 and collects the light emitted from the back surface 36b of the translucent panel 36. The capturing element 42 is provided inside the adjustment plate 12 and captures an image of the light collected by the objective lens 40.

In the case where the transparent droplet discharged from the head part 48 is attached to a part of the front surface 36a of the translucent panel 36, a part of the light from the light source 38 is diffusely reflected by the area of the front surface 36a of the translucent panel 36 to which the transparent droplet is attached (hereinafter referred to as the "attached area"), as indicated by the arrow 44 in FIG. 4. The intensity of the light diffusely reflected by the attached area becomes relatively weak. On the other hand, the other part of the light from the light source 38 is totally reflected by the area of the front surface 36a of the translucent panel 36 to which no transparent droplets are attached (hereinafter referred to as the "non-attached area"), as indicated by the arrow 46 in FIG. 4. The intensity of the light totally reflected by the non-attached area becomes relatively strong. Thus, by analyzing the intensity distribution of the light captured by the capturing element 42, the position of the transparent droplet attached to the front surface 36a of the translucent panel 36 (i.e., the XY plane coordinates on the front surface 36a of the translucent panel 36) may be detected. It is noted that for convenience of description, the size of the transparent droplet is exaggerated in FIG. 4.

The discharge unit 8 is a unit for discharging the transparent droplet, and is provided inside the housing 4. The transparent droplet discharge method by the discharge unit 8 is a so-called inkjet method in which a mist-like transparent droplet is discharged. As shown in FIG. 2, the discharge unit 8 includes the head part 48 (an example of the discharge part) and a driving mechanism 50 for driving the head part 48.

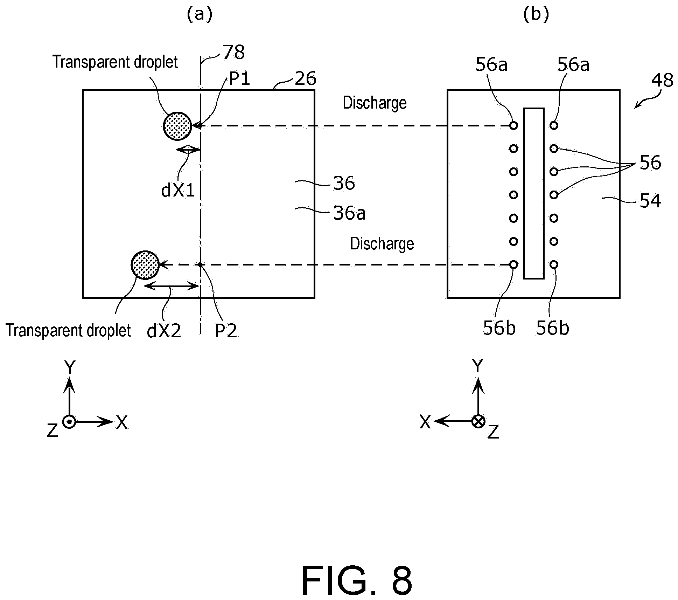

The head part 48 has a carriage 52 and a cartridge 54 detachably mounted on the carriage 52. The inside of the cartridge 54 is filled with transparent droplets. As shown in (b) of FIG. 8, which will be described later, a plurality of fine nozzles 56 are provided on the bottom surface of the cartridge 54. The plurality of nozzles 56 are arranged at intervals along the front and back direction (an example of the first direction) of the cartridge 54. With the cartridge 54 mounted on the carriage 52, the plurality of nozzles 56 are exposed from the lower end part of the carriage 52. The head part 48 discharges the transparent droplet supplied from the plurality of nozzles 56 of the cartridge 54 downward toward the well plate 10 or the adjustment plate 12 mounted on the tray 18 in the storage position. It is noted that for convenience of description, the size of the nozzles 56 is exaggerated in (b) of FIG. 8.

The driving mechanism 50 is a mechanism for reciprocating the head part 48 in a predetermined scanning direction (X-axis direction). As shown in FIG. 2, the driving mechanism 50 includes a guide shaft 58, a carrier motor 60 (an example of the driving part), and a timing belt 62.

The guide shaft 58 is supported by the base plate 16 inside the housing 4 and extends in a long shape along the predetermined scanning direction. The carriage 52 of the head part 48 is movably supported by the guide shaft 58. The carrier motor 60 includes, for example, a servo motor, and is supported by the base plate 16 inside the housing 4. The driving force of the carrier motor 60 is transmitted to the head part 48 via the timing belt 62. As a result, the head part 48 reciprocates in the predetermined scanning direction along the guide shaft 58 with respect to the well plate 10 or the adjustment plate 12 mounted on the tray 18 in the storage position. That is, the carrier motor 60 moves the head part 48 with respect to the tray 18 in the left and right direction.

The operation mode of the droplet dispensing device 2 (i.e., the operation mode of the tray motor 20, the head part 48, and the carrier motor 60) is switched from one of the first mode and the second mode to the other.

The first mode is an operation mode in which the transparent droplet is dispensed into the well plate 10. In the first mode, with the well plate 10 mounted on the upper surface of the tray 18, the head part 48 reciprocates in the predetermined scanning direction while the tray 18 moves from the storage position toward the pull-out position, and the transparent droplet is discharged from the head part 48 toward the well plate 10. As a result, a predetermined amount of the transparent droplet is stored in each of the plurality of wells 24 of the well plate 10.

On the other hand, the second mode is an operation mode in which the adjustment plate 12 is used to adjust the position on the well plate 10 where the transparent droplet is discharged from the head part 48 in the first mode. In the second mode, with the adjustment plate 12 mounted on the upper surface of the tray 18, the transparent droplet is discharged from the head part 48 toward the adjustment plate 12. When dispensing the transparent droplets into the well plate 10, the second mode is executed first, and then the first mode is executed. The operation in the second mode will be described later.

### [2. Functional configuration of droplet dispensing device]

Next, the functional configuration of the droplet dispensing device 2 according to the embodiment will be described with reference to FIG. 5. FIG. 5 is a block diagram showing the functional configuration of the droplet dispensing device 2 according to the embodiment.

As shown in FIG. 5, the adjustment plate 12 of the droplet dispensing device 2 includes, as the functional configuration, the first sensor 26, the second sensor 28, the third sensor 30, the fourth sensor 32, the connecting terminal 34, and the storage part 64.

Each of the first sensor 26, the second sensor 28, the third sensor 30, and the fourth sensor 32 outputs a detection signal to the CPU 66 (described later) via the connecting terminal 34 and the connecting terminal 23.

The storage part 64 is a non-volatile memory that stores sensor information regarding each of the first sensor 26, the second sensor 28, the third sensor 30, and the fourth sensor 32 (hereinafter also referred to as "each sensor"). The sensor information is information indicating, for example, (a) the size of each sensor, (b) the position of each sensor in the adjustment plate 12, and (c) the sensitivity of each sensor. The storage part 64 is electrically connected to the connecting terminal 34.

The housing 4 of the droplet dispensing device 2 includes, as the functional configuration, a connecting terminal 23, a central processing unit (CPU) 66 (an example of the controller), a storage part 68, a tray motor controller 70, a tray motor 20, a discharge controller 72, a head part 48, a carrier motor controller 74, a carrier motor 60, and a communication part 76.

The connecting terminal 23 is electrically connected to the CPU 66.

The CPU 66 controls the operation mode of the droplet dispensing device 2 by controlling the tray motor controller 70, the discharge controller 72, and the carrier motor controller 74. Specifically, the CPU 66 switches the operation mode of the droplet dispensing device 2 from one of the first mode and the second mode to the other. When switching the operation mode of the droplet dispensing device 2 to the second mode, the CPU 66 reads the sensor information stored in the storage part 64 of the adjustment plate 12 via the connecting terminal 34 and the connecting terminal 23. Further, the CPU 66 determines whether or not the nozzles 56 are clogged based on the detection signal from at least one of the first sensor 26, the second sensor 28, the third sensor 30, and the fourth sensor 32 by controlling the tray motor controller 70, the discharge controller 72, and the carrier motor controller 74. The clogging determination operation for the nozzles 56 will be described later. It is noted that various functions of the CPU 66 are executed by the CPU 66 executing programs stored in the memory.

The storage part 68 is a non-volatile memory that stores sensor information and the like read by the CPU 66.

The tray motor controller 70 drives the tray motor 20 based on the control signal from the CPU 66.

The discharge controller 72 drives the head part 48 based on the control signal from the CPU 66.

The carrier motor controller 74 drives the carrier motor 60 based on the control signal from the CPU 66.

The communication part 76 transmits and receives various kinds of information to and from a terminal device (e.g., a personal computer, etc.) external to the droplet dispensing device 2 by wire or wirelessly.

### [3. Operation in second mode]

### [3-1. Overall operation in second mode]

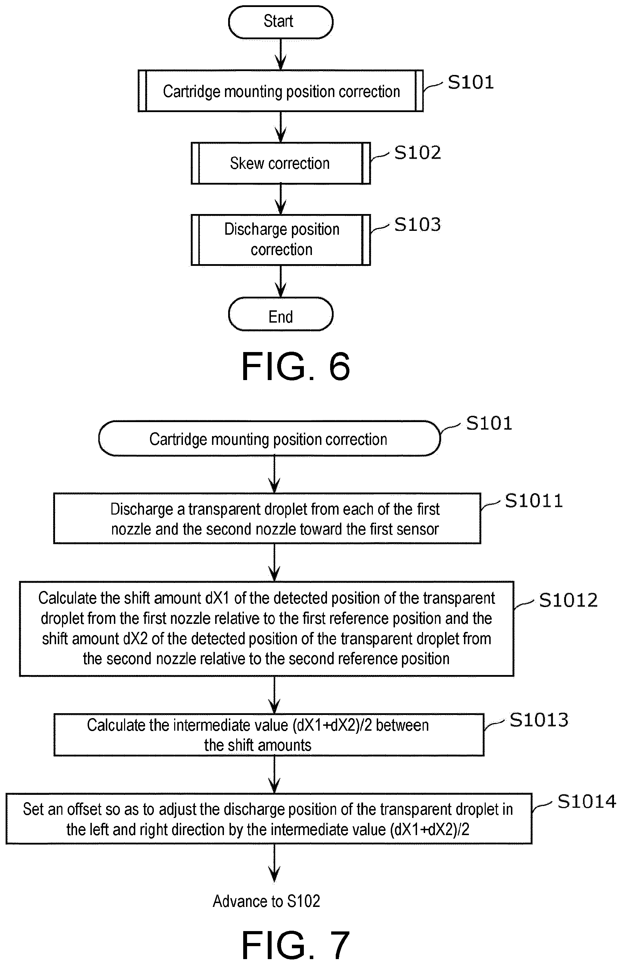

The overall operation in the second mode will be described with reference to FIG. 6. FIG. 6 is a flow chart showing the overall operation flow in the second mode in the droplet dispensing device 2 according to the embodiment.

As shown in FIG. 6, the CPU 66 of the droplet dispensing device 2 first executes cartridge mounting position correction (S101). In the cartridge mounting position correction, the shift amount of the discharge position of the transparent droplet from the head part 48 in the first mode due to the error in the mounting position of the cartridge 54 with respect to the carriage 52 is corrected (calibrated).

Next, the CPU 66 executes skew correction (S102). In the skew correction, the shift amount of the discharge position of the transparent droplet from the head part 48 in the first mode due to the distortion (skew) of the moving direction of the tray 18 is corrected.

Next, the CPU 66 executes discharge position correction (S103). In the discharge position correction, the shift amount of the discharge position of the transparent droplet from the head part 48 in the first mode due to factors other than the above (e.g., error in the origin position of the tray 18) is corrected. Thereafter, the process of the flow chart in FIG. 6 ends.

### [3-2. Cartridge mounting position correction]

Next, with reference to FIG. 7 and FIG. 8, step S101 of the flow chart in FIG. 6, that is, the cartridge mounting position correction will be described in more detail. FIG. 7 is a flow chart specifically showing the contents of step S101 of the flow chart in FIG. 6. FIG. 8 is a diagram illustrating the contents of step S101 of the flow chart in FIG. 6.

As shown in FIG. 7, in the cartridge mounting position correction, the CPU 66 first moves the head part 48 directly above the first sensor 26 by controlling the tray motor controller 70 and the carrier motor controller 74, and then causes the transparent droplet to be discharged from each of the first nozzle 56a and the second nozzle 56b among the plurality of nozzles 56 of the cartridge 54 toward the first sensor 26 by controlling the discharge controller 72 (S1011). At this time, the CPU 66 causes the transparent droplet to be discharged from each of the first nozzle 56a and the second nozzle 56b with the reference line 78 on the first sensor 26 as the target position. It is noted that, as shown in (a) of FIG. 8, the reference line 78 is a straight line that passes through the center of the first sensor 26 and is parallel to the front and back direction.

As shown in (b) of FIG. 8, the first nozzles 56a are the nozzles provided at the rearmost end in the front and back direction, and the second nozzles 56b are the nozzles provided at the frontmost end in the front and back direction. At this time, when there is an error in the mounting position of the cartridge 54 with respect to the carriage 52 (i.e., when the arrangement direction of the plurality of nozzles 56 is slightly inclined with respect to the front and back direction), a shift amount is generated in the left and right direction (an example of a second direction) between the discharge position of the transparent droplet from the first nozzle 56a and the discharge position of the transparent droplet from the second nozzle 56b, as shown in (a) of FIG. 8. It is noted that for convenience of description, the size of the transparent droplet is exaggerated in (a) of FIG. 8.

Next, the CPU 66 calculates the shift amount dX1 in the left and right direction between the first reference position P1 in the first sensor 26 and the position of the transparent droplet from the first nozzle 56a detected by the first sensor 26 based on the detection signal from the first sensor 26 (S1012). Further, the CPU 66 calculates the shift amount dX2 in the left and right direction between the second reference position P2 in the first sensor 26 and the position of the transparent droplet from the second nozzle 56b detected by the first sensor 26 based on the detection signal from the first sensor 26 (S1012). It is noted that the first reference position P1 and the second reference position P2 are positions on the reference line 78.

Next, the CPU 66 calculates the intermediate value (dX1+dX2)/2 between the shift amount dX1 and the shift amount dX2 (S1013).

Next, the CPU 66 sets an offset so as to adjust the discharge position of the transparent droplet from the head part 48 in the first mode in the left and right direction (e.g., the plus side of the X-axis direction) by the above-mentioned intermediate value (dX1+dX2)/2 based on the sensor information read from the storage part 64 (S1014). Thereafter, the process advances to step S102 of the flow chart in FIG. 6.

It is noted that, in this embodiment, although the transparent droplet is discharged to the first sensor 26 in the cartridge mounting position correction, the disclosure is not limited thereto, and the transparent droplet may also be discharged to other sensors (any of the second sensor 28, the third sensor 30, and the fourth sensor 32).

### [3-3. Skew correction]

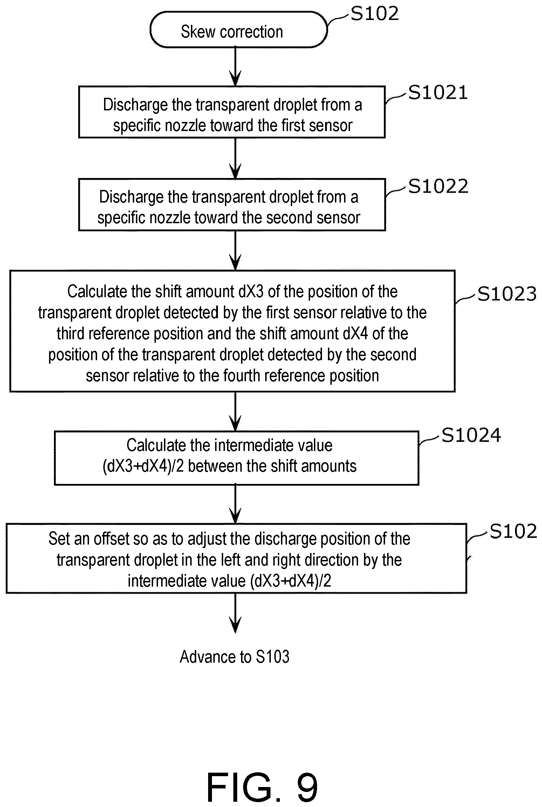

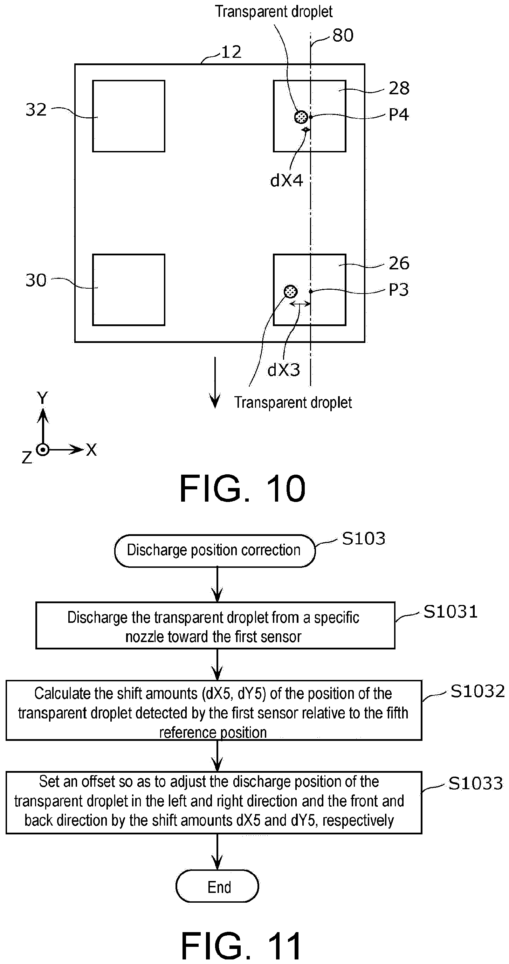

Next, with reference to FIG. 9 and FIG. 10, step S102 of the flow chart in FIG. 6, that is, the skew correction will be described in more detail. FIG. 9 is a flow chart specifically showing the contents of step S102 of the flow chart in FIG. 6. FIG. 10 is a diagram illustrating the contents of step S102 of the flow chart in FIG. 6.

As shown in FIG. 9, in the skew correction, the CPU 66 first moves the tray 18 from the storage position toward the pull-out position by controlling the tray motor controller 70. Next, the CPU 66 causes the transparent droplet to be discharged from a specific nozzle 56 (e.g., the first nozzle 56a described above) among the plurality of nozzles 56 of the cartridge 54 toward the first sensor 26 by controlling the discharge controller 72 while moving the tray 18 (S1021). At this time, the CPU 66 causes the transparent droplet to be discharged from the specific nozzle 56 with the reference line 80 on the first sensor 26 as the target position. It is noted that, as shown in FIG. 10, the reference line 80 is a straight line that passes through the center of the first sensor 26 and is parallel to the front and back direction.

Next, the CPU 66 causes the transparent droplet to be discharged from the specific nozzle 56 toward the second sensor 28 by controlling the discharge controller 72 while moving the tray 18 (S1022). At this time, the CPU 66 causes the transparent droplet to be discharged from the specific nozzle 56 with the reference line 80 on the second sensor 28 as the target position. It is noted that, as shown in FIG. 10, the reference line 80 is a straight line that passes through the center of the second sensor 28 and is parallel to the front and back direction.

When there is a distortion of the moving direction of the tray 18, a shift amount is generated in the left and right direction (an example of the second direction) between the discharge position of the transparent droplet in the first sensor 26 and the discharge position of the transparent droplet in the second sensor 28, as shown in FIG. 10. It is noted that for convenience of description, the size of the transparent droplet is exaggerated in FIG. 10.

Next, the CPU 66 calculates the shift amount dX3 in the left and right direction between the third reference position P3 in the first sensor 26 and the position of the transparent droplet detected by the first sensor 26 based on the detection signal from the first sensor 26 (S1023). Further, the CPU 66 calculates the shift amount dX4 in the left and right direction between the fourth reference position P4 in the second sensor 28 and the position of the transparent droplet detected by the second sensor 28 based on the detection signal from the second sensor 28 (S1023). It is noted that the third reference position P3 and the fourth reference position P4 are positions on the reference line 80.

Next, the CPU 66 calculates the intermediate value (dX3+dX4)/2 between the shift amount dX3 and the shift amount dX4 (S1024).

Next, the CPU 66 sets an offset so as to adjust the discharge position of the transparent droplet from the head part 48 in the first mode in the left and right direction (e.g., the plus side of the X-axis direction) by the above-mentioned intermediate value (dX3+dX4)/2 based on the sensor information read from the storage part 64 (S1025). Thereafter, the process advances to step S103 of the flow chart in FIG. 6.

It is noted that, in this embodiment, although the transparent droplet is discharged to each of the first sensor 26 and the second sensor 28 in the skew correction, the disclosure is not limited thereto, and the transparent droplet may also be discharged to each of the third sensor 30 and the fourth sensor 32.

### [3-4. Discharge position correction]

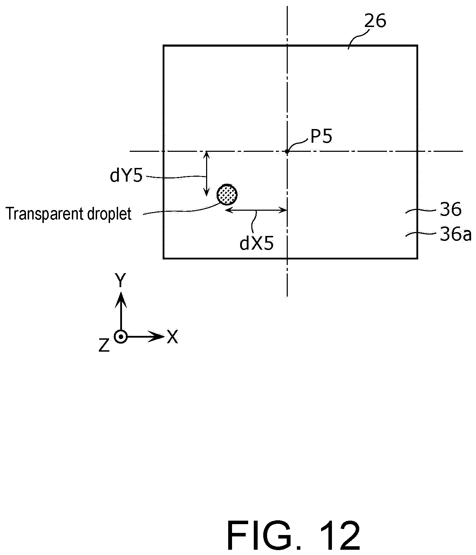

Next, with reference to FIG. 11 and FIG. 12, step S103 of the flow chart in FIG. 6, that is, the discharge position correction will be described in more detail. FIG. 11 is a flow chart specifically showing the contents of step S103 of the flow chart in FIG. 6. FIG. 12 is a diagram illustrating the contents of step S103 of the flow chart in FIG. 6.

As shown in FIG. 11, in the discharge position correction, the CPU 66 first moves the head part 48 directly above the first sensor 26 by controlling the tray motor controller 70 and the carrier motor controller 74, and then causes the transparent droplet to be discharged from the specific nozzle 56 (e.g., the first nozzle 56a) among the plurality of nozzles 56 of the cartridge 54 toward the first sensor 26 by controlling the discharge controller 72 (S1031). At this time, the CPU 66 causes the transparent droplet to be discharged from the specific nozzle 56 with the fifth reference position P5 on the first sensor 26 as the target position. It is noted that the fifth reference position P5 is a position at the center of the first sensor 26.

When there are other factors besides the error in the mounting position of the cartridge 54 with respect to the carriage 52 and the distortion of the moving direction of the tray 18 (e.g., error in the origin position of the tray 18) described above, a shift amount is generated in the left and right direction and/or the front and back direction between the discharge position of the transparent droplet from the specific nozzle 56 and the fifth reference position P5, as shown in FIG. 12. It is noted that for convenience of description, the size of the transparent droplet is exaggerated in FIG. 12.

Next, the CPU 66 calculates the shift amount dX5 in the left and right direction and the shift amount dY5 in the front and back direction between the fifth reference position P5 in the first sensor 26 and the position of the transparent droplet detected by the first sensor 26 based on the detection signal from the first sensor 26 (S1032).

Next, the CPU 66 sets an offset so as to adjust the discharge position of the transparent droplet from the head part 48 in the first mode in the left and right direction (e.g., the plus side of the X-axis direction) by the shift amount dX5 described above, and adjust the front and back direction (e.g., the plus side of the Y-axis direction) by the shift amount dY5 described above based on the sensor information read from the storage part 64 (S1033). Thereafter, the process of the flow chart in FIG. 6 ends.

It is noted that, in this embodiment, although the transparent droplet is discharged to the first sensor 26 in the discharge position correction, the disclosure is not limited thereto, and the transparent droplet may also be discharged to other sensors (any of the second sensor 28, the third sensor 30, and the fourth sensor 32).

### [4. Clogging determination operation for nozzle]

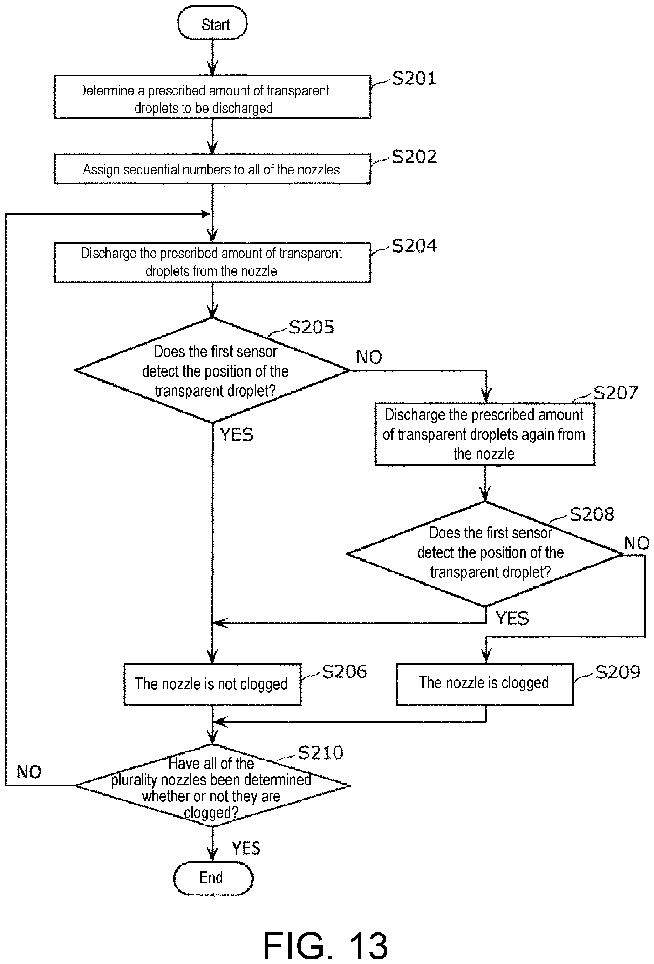

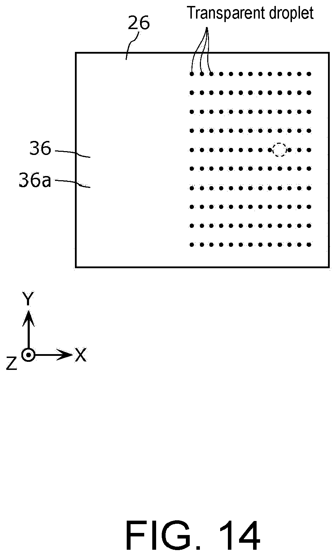

Next, with reference to FIG. 13 and FIG. 14, the clogging determination operation for the nozzle 56 will be described in more detail. FIG. 13 is a flow chart showing the flow of the clogging determination operation for the nozzle 56 in the droplet dispensing device 2 according to the embodiment. FIG. 14 is a diagram illustrating the clogging determination operation for the nozzle 56 in the droplet dispensing device 2 according to the embodiment.

As shown in FIG. 13, the CPU 66 first determines a prescribed amount of transparent droplets to be discharged from one nozzle 56 in the operation of the clogging determination operation for the nozzle 56 (S201). Next, the CPU 66 assigns sequential numbers to all of the plurality of nozzles 56, starting from, for example, "1" (S202). It is noted that, in this embodiment, the plurality of nozzles 56 are arranged in a matrix (e.g., 10×13).

Next, the CPU 66 moves the head part 48 directly above the first sensor 26 by controlling the tray motor controller 70 and the carrier motor controller 74, and then causes the transparent droplet to be discharged from each of the plurality of nozzles 56 of the cartridge 54, one nozzle 56 each, toward a plurality of different positions in the first sensor 26 by controlling the discharge controller 72.

Specifically, the CPU 66 causes a prescribed amount of transparent droplets to be discharged from the nozzle 56 assigned the number "n" (n is an integer of 1 or more) toward the position corresponding to that nozzle 56 in the first sensor 26 (S204). In the case where the first sensor 26 detects the position of the transparent droplet (YES in S205), the CPU 66 determines that the nozzle 56 assigned the number "n" is not clogged based on the detection signal from the first sensor 26 (S206).

Returning to step S205, in the case where the first sensor 26 does not detect the position of the transparent droplet (NO in S205), the CPU 66 causes a prescribed amount of transparent droplets to be discharged again from the nozzle 56 assigned the number "n" toward the position corresponding to that nozzle 56 in the first sensor 26 based on the detection signal from the first sensor 26 (S207).

As a result, in the case where the first sensor 26 detects the position of the transparent droplet (YES in S208), the CPU 66 determines that the nozzle 56 assigned the number "n" is not clogged based on the detection signal from the first sensor 26 (S206).

On the other hand, in step S208, in the case where the first sensor 26 does not detect the position of the transparent droplet again (NO in S208), the CPU 66 determines that the nozzle 56 assigned the number "n" is clogged based on the detection signal from the first sensor 26 (S209). At this time, as shown by the broken line circle in FIG. 14, no transparent droplet is attached to the position of the first sensor 26 that corresponds to the nozzle 56 assigned the number "n".

Steps S204 to S209 described above are repeatedly executed until it is determined whether or not the nozzle 56 is clogged for all of the plurality of nozzles 56 (S210). Thereafter, the process of the flow chart in FIG. 13 ends.

### [5. Effect]

As mentioned above, in this embodiment, the CPU 66 adjusts the position on the well plate 10 in which the transparent droplet is discharged from the head part 48 in the first mode based on a position of the transparent droplet detected by, for example, the first sensor 26 in the second mode.

Thereby, even when the transparent droplet is colorless and transparent, the discharge position of the transparent droplet in the first mode may be adjusted with high precision.

### (Modification)

Although the droplet dispensing device according to the embodiment of the disclosure has been described above, the disclosure is not limited to the above embodiment.

In the above embodiment, each of the first sensor 26, the second sensor 28, the third sensor 30, and the fourth sensor 32 is configured by an optical sensor, but the disclosure is not limited thereto, and may be configured by a sensor of another type, such as an electrostatic capacity type sensor.

Further, in the above embodiment, a case has been described in which the droplet dispensing device 2 dispenses transparent droplets, but the disclosure is not limited thereto, and the droplet dispensing device 2 is also capable of dispensing non-transparent droplets (e.g., droplets with a transmittance of less than 80%).

The disclosure may be applied, for example, as a droplet dispensing device for dispensing transparent droplets such as reagents to a well plate.

### [Reference Signs List]

2 Droplet dispensing device
4 Housing
6 Tray unit
8 Discharge unit
10 Well plate
12 Adjustment plate
14 Opening part
16 Base plate
18 Tray
20 Tray motor
22 Guide plate
23, 34 Connecting terminal
24 Well
26 First sensor
28 Second sensor
30 Third sensor
32 Fourth sensor
36 Translucent panel
36a Front surface
36b Back surface
38 Light source
40 Objective lens
42 Capturing element
44, 46 Arrow
48 Head part
50 Driving mechanism
52 Carriage
54 Cartridge
56 Nozzle
58 Guide shaft
60 Carrier motor
62 Timing belt
64, 68 Storage part
66 CPU
70 Tray motor controller
72 Discharge controller
74 Carrier motor controller
76 Communication part
78, 80 Reference line

## Claims

1. A droplet dispensing device (2) for dispensing a transparent droplet into a well plate (10) with a well (24) formed on an upper surface, the droplet dispensing device comprising:
an adjustment plate (12);
a sensor, provided on an upper surface of the adjustment plate and detecting a position of the transparent droplet attached to a front surface;
a mount part, on which one of the well plate and the adjustment plate is detachably mounted;
a discharge part, discharging the transparent droplet;
a driving part, moving the mount part and the discharge part relative to each other; and
a controller, controlling the discharge part and the driving part, the controller switching an operation mode of the discharge part and the driving part from one of a first mode and a second mode to the other, wherein in the first mode, the transparent droplet is discharged from the discharge part toward the well of the well plate with the well plate mounted on the mount part, and in the second mode, the transparent droplet is discharged from the discharge part toward the sensor with the adjustment plate mounted on the mount part, and
wherein the controller adjusts a position on the well plate in which the transparent droplet is discharged from the discharge part in the first mode based on a position of the transparent droplet detected by the sensor in the second mode.

2. The droplet dispensing device according to claim 1, wherein
the adjustment plate has a first terminal electrically connected to the sensor,
the mount part has a second terminal electrically connected to the controller, and
in the second mode, with the adjustment plate mounted on the mount part, a detection signal from the sensor is output to the controller via the first terminal and the second terminal by electrically connecting the first terminal and the second terminal.

3. The droplet dispensing device according to claim 2, wherein
the droplet dispensing device further comprises a storage part (64, 68) provided on the adjustment plate and electrically connected to the first terminal, and the storage part storing sensor information regarding the sensor, and
in the second mode, the controller reads the sensor information from the storage part via the first terminal and the second terminal and adjusts a position on the well plate in which the transparent droplet is discharged from the discharge part in the first mode based on a position of the transparent droplet detected by the sensor and the sensor information.

4. The droplet dispensing device according to any one of claims 1 to 3, wherein
in the second mode, with the adjustment plate mounted on the mount part, the controller controls the discharge part and the driving part so that a reference position in the sensor is set as a target position and the transparent droplet is discharged, and
the controller adjusts a position on the well plate in which the transparent droplet is discharged from the discharge part in the first mode based on a shift amount between the reference position of the sensor and a position of the transparent droplet detected by the sensor.

5. The droplet dispensing device according to any one of claims 1 to 3, wherein
the discharge part comprises a plurality of nozzles (56) arranged at intervals along a first direction, and the plurality of nozzles having a first nozzle (56a) and a second nozzle (56b),
in the second mode, with the adjustment plate mounted on the mount part,
the controller controls the discharge part and the driving part so that the transparent droplet is discharged from each of the first nozzle and the second nozzle toward the sensor, and
the controller adjusts a position on the well plate in which the transparent droplet is discharged from the discharge part in the first mode based on a shift amount in a second direction intersecting the first direction between a first reference position in the sensor and a position of the transparent droplet from the first nozzle detected by the sensor and a shift amount in the second direction between a second reference position in the sensor and a position of the transparent droplet from the second nozzle detected by the sensor.

6. The droplet dispensing device according to any one of claims 1 to 3, wherein
the driving part moves the mount part in a first direction with respect to the discharge part,
the sensor has a first sensor and a second sensor arranged at intervals along the first direction on the upper surface of the adjustment plate, and
in the second mode, with the adjustment plate mounted on the mount part, the controller controls the discharge part and the driving part so that the transparent droplet is discharged from the discharge part toward each of the first sensor and the second sensor while moving the mount part in the first direction with respect to the discharge part, and
the controller adjusts a position on the well plate in which the transparent droplet is discharged from the discharge part in the first mode based on a shift amount in a second direction intersecting the first direction between a first reference position in the first sensor and a position of the transparent droplet detected by the first sensor and a shift amount in the second direction between a second reference position in the second sensor and a position of the transparent droplet detected by the second sensor.

7. The droplet dispensing device according to any one of claims 1 to 3, wherein
the discharge part has a plurality of nozzles,
in the second mode, with the adjustment plate mounted on the mount part, the controller controls the discharge part and the driving part so that the transparent droplet is discharged from each of the plurality of nozzles, one nozzle each, toward a plurality of different positions in the sensor, and
the controller determines, when a position of the transparent droplet from a specific nozzle among the plurality of nozzles is not detected by the sensor, that the specific nozzle is clogged.

8. The droplet dispensing device according to claim 7, wherein
the controller, when a position of the transparent droplet from the specific nozzle is not detected by the sensor, controls the discharge part so that the transparent droplet is discharged again from the specific nozzle, and, when a position of the transparent droplet from the specific nozzle is not detected again by the sensor as a result, determines that the specific nozzle is clogged.

9. A control method of a droplet dispensing device for dispensing a transparent droplet into a well plate with a well formed on an upper surface,
the droplet dispensing device comprising:
an adjustment plate;
a sensor, provided on an upper surface of the adjustment plate and detecting a position of the transparent droplet attached to a front surface;
a mount part, on which one of the well plate and the adjustment plate is detachably mounted;
a discharge part, discharging the transparent droplet; and
a driving part, moving the mount part and the discharge part relative to each other, and
the control method comprising:
a step of causing the transparent droplet to be discharged from the discharge part toward the well of the well plate, with the well plate mounted on the mount part, when an operation mode of the discharge part and the driving part is switched to a first mode;
a step of causing the transparent droplet to be discharged from the discharge part toward the sensor, with the adjustment plate mounted on the mount part, when the operation mode of the discharge part and the driving part is switched to a second mode; and
a step of adjusting a position on the well plate in which the transparent droplet is discharged from the discharge part in the first mode based on a position of the transparent droplet detected by the sensor in the second mode.
